# FASCICULE DE BREVET EUROPEEN

(11) **EP 0 773 554 B1**
(45) Date de publication et mention de la délivrance du brevet: **10.03.1999**
(21) Numéro de dépôt: 96402374.1
(22) Date de dépôt: 07.11.1996
(51) Int. Cl.: G21C 19/07

(54) **Installation et procédé de stockage conjoint d'assemblages de combustible nucléaire et de barres de commande**
Einrichtung und Verfahren zum gemeinsamen Lagern von Kernbrennstabbündeln und Steuerstäben
Installation and method for joint storage of nuclear fuel assemblies and control rods

(30) Priorité: 10.11.1995 FR 9513336
(43) Date de publication de la demande: 14.05.1997
(73) Titulaire: A.T.E.A. Société Atlantique de Techniques Avancées, 44472 Carquefou (FR)
(72) Inventeur: Robert, Jean, 44240 la Chapelle sur Erdre (FR); Kopecky, Bernard, 44300 Nantes (FR)
(74) Mandataire: Dubois-Chabert, Guy

(56) Documents cités:
- EP-A- 0 626 699
- DE-A- 2 822 397
- DE-A- 3 027 562
- FR-A- 2 680 909

## Description

### Domaine technique

L'invention concerne principalement une installation de stockage conçue pour recevoir à la fois des assemblages de combustible nucléaire et des barres de contrôle, après que ces assemblages et ces barres aient été irradiés dans un réacteur nucléaire.

L'installation de stockage selon l'invention est plus particulièrement adaptée pour recevoir des assemblages de combustible nucléaire, de section carrée, ainsi que des barres de contrôle comportant chacune un pied surmonté d'une partie active, de section cruciforme. De tels assemblages et de telles barres de contrôle sont utilisés dans les réacteurs nucléaires à eau bouillante.

L'invention concerne également un procédé de stockage mettant en oeuvre une telle installation.

### Etat de la technique

Lorsque les assemblages de combustible nucléaire sont retirés du coeur des réacteurs nucléaires, il est d'usage de les introduire verticalement dans des installations de stockage en forme de râtelier, qui sont elles-mêmes placées dans des piscines remplies d'eau. Le stockage des assemblages dans ces installations a pour fonction de leur faire perdre suffisamment d'activité pour qu'ils puissent être transportés sans risque sur un autre site, par exemple pour y être démantelés, puis retraités.

Les installations de stockage existantes sont conçues pour recevoir un nombre d'assemblage aussi élevé que possible dans un volume donné, tout en assurant une absorption efficace des neutrons qui s'échappent des assemblages.

Dans la pratique et comme l'illustre notamment le document US-A-4 248 668, chacun des assemblages de combustible nucléaire est reçu verticalement dans un logement de section carrée. Plus précisément, une installation de stockage est généralement formée d'un ensemble d'étuis de stockage de section carrée, disposés en damier et fixés sensiblement verticalement sur une plaque inférieure horizontale reposant par des pieds sur le fond de la piscine. Les assemblages de combustible nucléaire sont reçus dans les logements formés dans et entre les étuis.

Comme l'illustre aussi le document FR-A-2 680 909, il est connu d'associer aux parois des étuis des panneaux en matériau neutrophage, qui présentent un fort pouvoir d'absorption vis-à-vis des neutrons. La présence de ces panneaux permet de réduire les distances entre les assemblages reçus dans les logements sans qu'une réaction en chaîne risque de s'amorcer.

Lorsque les barres de contrôle qui assurent le pilotage des réacteurs nucléaires sont remplacées, les barres usagées doivent elles aussi être stockées un certain temps en piscine sur le site du réacteur avant d'être transférées sur un autre site.

Dans le cas des réacteurs nucléaires à eau pressurisée, les barres de contrôle se présentent sous la forme de grappes de crayons absorbants, qui sont introduites par le haut dans des tubes-guides prévus à cet effet dans les assemblages . Par conséquent, ces grappes peuvent être introduites sans difficulté particulière dans les assemblages préalablement reçus dans l'installation de stockage.

En revanche, dans les réacteurs nucléaires à eau bouillante, les barres de contrôle comprennent généralement un embout inférieur servant à leur manutention et une partie active de section cruciforme, prévue pour être insérée par le bas dans les interstices formés entre quatre assemblages voisins. Par conséquent, il est totalement impossible d'insérer ces barres de contrôle par le haut entre les assemblages de combustible nucléaire lorsque ces derniers ont été placés dans les logements d'une installation de stockage existante. Dans les réacteurs nucléaires à eau bouillante, les barres de contrôle irradiées doivent donc être stockées séparément des assemblages, dans des installations de stockage distinctes. Il en découle une perte de place importante sur le site du réacteur.

### Exposé de l'invention

L'invention a précisément pour objet une installation de stockage conçue pour recevoir à la fois des assemblages de combustible nucléaire et des barres de contrôle en provenance d'un réacteur nucléaire à eau bouillante, afin de procurer un gain de place appréciable sur le site de ce réacteur.

Conformément à l'invention, ce résultat est obtenu au moyen d'une installation de stockage conjoint d'assemblages de combustible nucléaire de section carrée, et de barres de contrôle comportant chacune un embout surmonté d'une partie active, de section cruciforme, caractérisée par le fait qu'elle comprend :
- une plaque inférieure, sensiblement horizontale ;
- des tubes enveloppes, de section carrée, disposés en damier et fixés sensiblement verticalement sur la plaque inférieure de façon à définir, dans et entre les tubes enveloppes, des logements aptes à recevoir chacun une barre de contrôle reposant par son embout sur la plaque inférieure ;
- des étuis de stockage amovibles, de section carrée, aptes à être montés par groupes de quatre dans chacun des logements autour de la partie active d'une barre de contrôle, chaque étui comportant un fond apte à supporter un assemblage de combustible nucléaire ; et
- des embases interposées entre la plaque inférieure et chaque groupe de quatre étuis de telle sorte que les fonds de ces étuis soient espacés de la plaque inférieure d'une distance sensiblement égale à la hauteur de l'embout d'une barre de contrôle.

Dans une forme de réalisation préférentielle de l'invention, des cales sont interposées entre les quatre étuis reçus dans un même logement, de telle sorte que ces étuis soient espacés les uns des autres et de la barre de contrôle.

De préférence, chaque groupe de quatre étuis fait alors partie d'un ensemble unitaire amovible qui comprend de plus l'une des embases ainsi que les cales précitées.

L'embase de chaque ensemble unitaire amovible se présente alors avantageusement sous la forme d'une pièce tubulaire sensiblement verticale et dont la section carrée est légèrement inférieure à celle des tubes enveloppes. Les dimensions de cette pièce tubulaire sont choisies de telle sorte qu'elles permettent à l'ensemble unitaire amovible de reposer sur la plaque inférieure de l'installation, en entourant l'embout de la barre de contrôle qui a normalement été montée auparavant dans le logement correspondant.

La plaque inférieure de l'installation de stockage comporte de préférence des pieds de hauteur réglable qui font saillie vers le bas pour permettre à cette plaque de reposer dans le fond d'une piscine remplie d'eau.

Afin de fermer les logements définis entre les tubes enveloppes à la périphérie de l'installation, celle-ci comporte de plus au moins une tôle de fermeture apte à contenir les étuis de stockage amovibles.

Pour permettre un stockage sûr dans un minimum de place, chacun des étuis de stockage comporte de préférence une garniture intérieure en un matériau neutrophage.

Dans la forme de réalisation préférentielle de l'invention, les tubes enveloppes sont reliés entre eux par des pattes d'espacement qui comportent des surfaces d'appui tournées vers les logements définis entre les tubes enveloppes. Ces surfaces d'espacement permettent de maintenir, les étuis reçus dans ces derniers logements espacés des tubes enveloppes.

L'invention a aussi pour objet un procédé permettant de stocker conjointement des assemblages de combustible nucléaire, de section carrée, et des barres de contrôle comportant chacune un embout surmonté d'une partie active, de section cruciforme, dans une installation de stockage présentant des logements sensiblement verticaux, de section carrée.

Ce procédé est caractérisé par le fait qu'il comprend les étapes suivantes :
- insertion d'une barre de contrôle dans chacun des logements ;
- mise en place d'un groupe de quatre étuis de stockage amovibles dans chacun des logements, autour de la partie active de la barre de contrôle ; et
- insertion d'un assemblage de combustible nucléaire dans chacun des étuis.

La mise en place d'un groupe de quatre étuis est avantageusement assurée en introduisant dans le logement un ensemble unitaire amovible qui comprend les quatre étuis, des cales d'espacement interposées entre les étuis et une embase disposée sous les étuis, dans le fond du logement et autour de l'embout de la barre de contrôle.

### Brève description des dessins

On décrira à présent à titre d'exemple non limitatif, une forme de réalisation préférentielle de l'invention, en se référant aux dessins annexés, dans lesquels :
- la figure 1 est une vue en perspective, avec arrachements, représentant une installation de stockage d'assemblages et de barres de contrôle conforme à l'invention ;
- la figure 2 est une vue en coupe verticale illustrant plus en détail l'un des tubes enveloppes et la structure qu'il contient, une barre de contrôle et un assemblage de combustible nucléaire étant illustrés en traits mixtes ;
- la figure 3 est une vue de dessus d'une partie de l'installation ; et
- la figure 4 est une vue en perspective représentant encore à plus grande échelle deux pattes d'espacement reliant par leurs angles deux tubes enveloppes voisins de l'installation.

### Exposé détaillé d'une forme de réalisation préférentielle

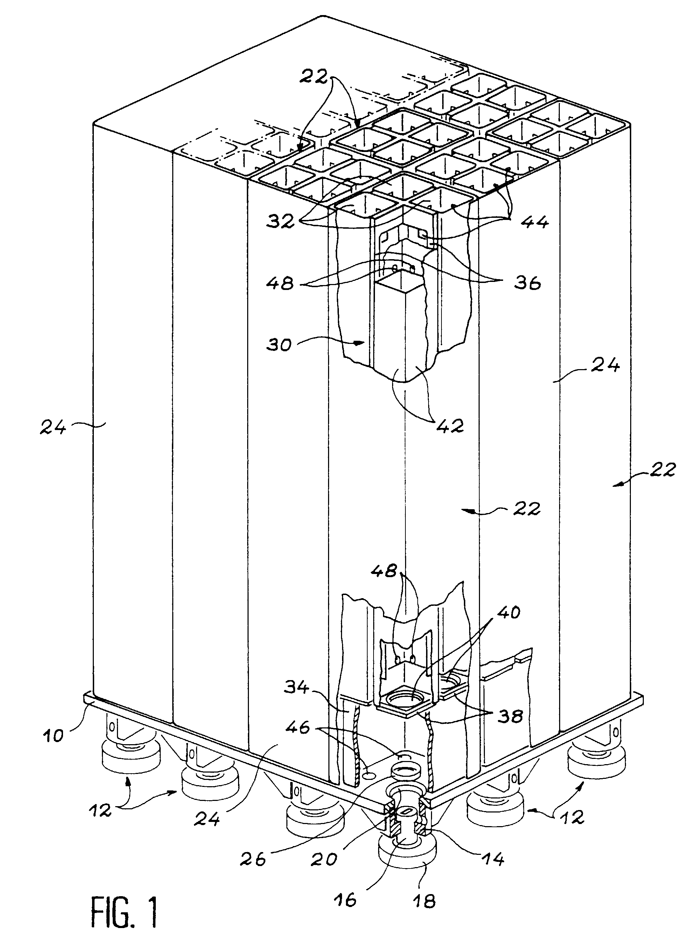

Sur la figure 1, on a représenté à titre d'exemple une installation de stockage conforme à l'invention, permettant de stocker à la fois quarante huit assemblages de combustible nucléaire en provenance d'un réacteur nucléaire à eau bouillante et douze barres de contrôle préalablement utilisées dans le même réacteur. Une telle installation est prévue pour être placée dans une piscine remplie d'eau, seule ou avec des installations de stockage identiques ou de dimensions différentes, pour permettre aux assemblages et aux barres de contrôle d'être ensuite transférés sans risque sur un autre site.

On comprendra aisément qu'il est possible de donner à l'installation de stockage selon l'invention des dimensions différentes lui permettant de loger un plus grand nombre ou un plus petit nombre d'assemblages et de barres de contrôle, sans sortir du cadre de l'invention. Quelles que soient les dimensions de l'installation, son agencement est tel que le nombre d'assemblages de combustible nucléaire susceptible d'y être stocké est quatre fois plus important que le nombre de barres de contrôle qu'elle peut recevoir.

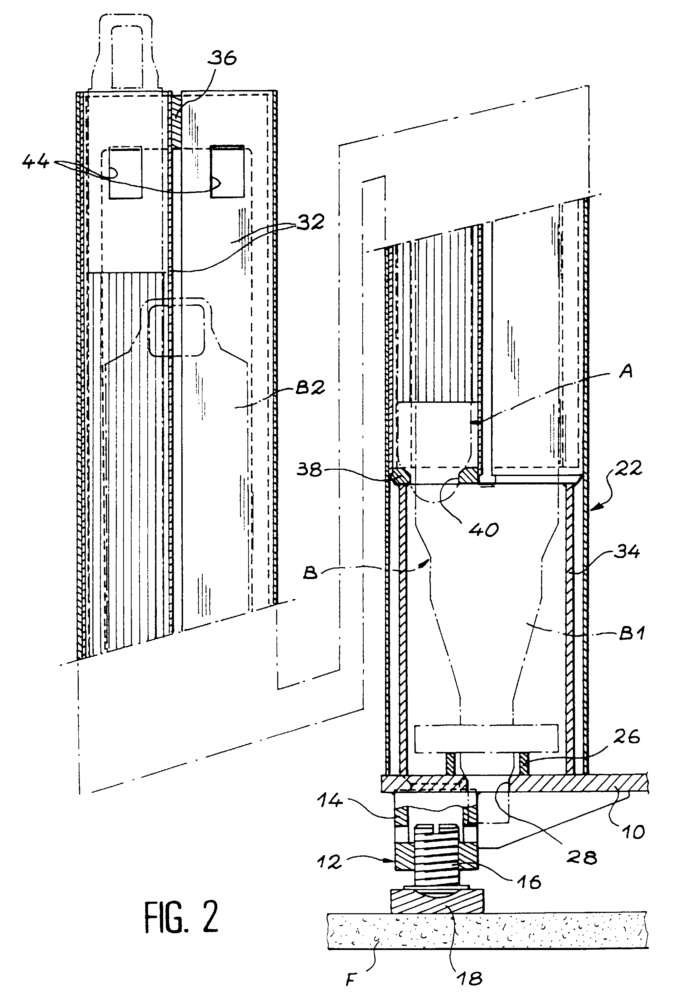

Avant de procéder à la description de l'installation de stockage selon l'invention, il est rappelé que les assemblages de combustible nucléaire qui équipent les réacteurs nucléaires à eau bouillante sont des assemblages de section carrée dont l'un, désigné par la référence A, est représenté schématiquement en traits mixtes sur la figure 2.

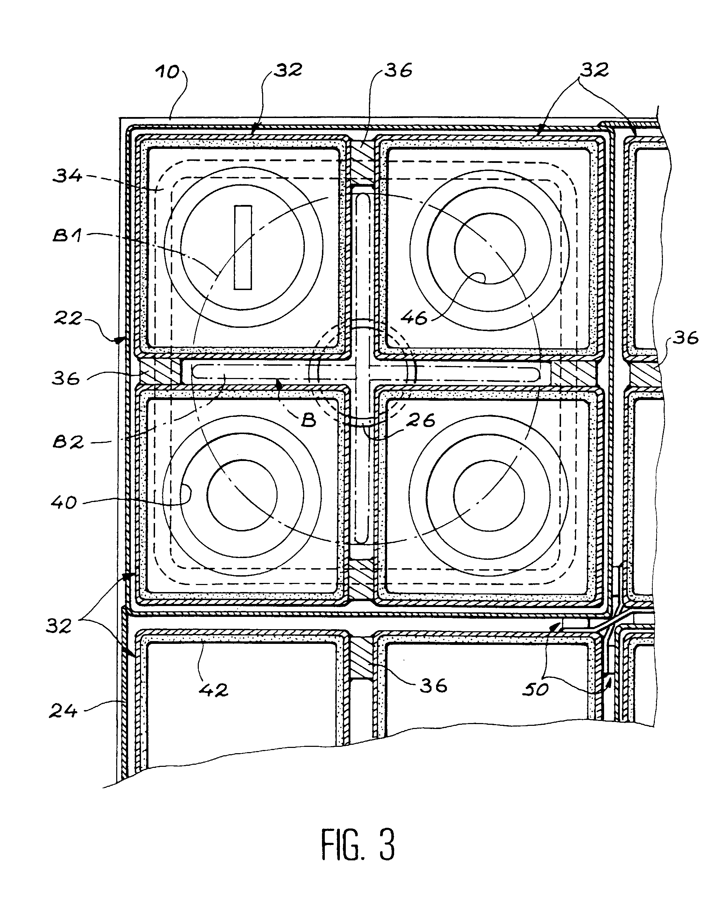

Comme on l'a représenté également en traits mixtes sur les figures 2 et 3 sous la référence B, les barres de contrôle qui sont associées à ces assemblages A dans les réacteurs nucléaires à eau bouillante comprennent chacune un embout B1 surmonté d'une partie active B2 de section cruciforme. De façon plus précise, une barre de contrôle B est normalement associée, dans le coeur du réacteur, à quatre assemblages A de façon telle que l'embout B1 de la barre de contrôle soit placé en dessous des assemblages, pour permettre le pilotage du réacteur par le bas, et que la partie active B2 de la barre de contrôle soit insérée entre quatre assemblages A voisins. Ainsi, la partie active B2 de chaque barre de contrôle B s'étend verticalement sur une hauteur approximativement égale à celle de la partie active des assemblages A et forme quatre ailettes à angle droit qui viennent s'insérer dans les interstices formés entre les assemblages.

Comme l'illustrent bien les figures 1 à 3, l'installation de stockage conforme à l'invention comprend une plaque inférieure 10, sensiblement horizontale. Cette plaque inférieure 10 est prévue pour reposer sur le fond F (figure 2) d'une piscine par des pieds 12 dont la hauteur est réglable. Ce caractère réglable des pieds 12 est conçu pour permettre à chacun d'entre eux de transférer au fond F de la piscine une fraction sensiblement égale de la charge supportée par la plaque inférieure 10, en dépit des défauts qui peuvent exister sur le fond de la piscine. Il permet en outre de régler le niveau de cette plaque 10 afin que sa face supérieure soit horizontale.

Dans la pratique, et comme l'illustrent notamment les figures 1 et 2, le réglage des pieds 12 peut être obtenu en réalisant chacun d'entre eux au moyen d'une partie supérieure 14 en forme de cylindre creux, d'axe vertical, fixé sous la face inférieure de la plaque 10, -et d'une partie inférieure 16 vissée dans la partie supérieure 14 selon son axe. La partie inférieure 16 porte un patin d'appui 18 à son extrémité basse. Un trou 20 est formé dans la plaque 10, selon l'axe vertical de chacun des pieds 12, afin de permettre un vissage et un dévissage de la partie inférieure 16 depuis le dessus de la plaque 10, à l'aide d'un outil approprié.

L'installation de stockage représentée sur les figures comprend de plus un certain nombre de tubes enveloppes 22, de section carrée, disposés en damier et fixés sensiblement verticalement sur la plaque inférieure 10. La fixation des tubes enveloppes 22 sur la plaque inférieure 10 peut notamment être réalisée par soudage.

Du fait de cet agencement, des logements verticaux de dimensions sensiblement équivalentes sont formés au-dessus de la plaque 10, à la fois à l'intérieur de chacun des tubes enveloppes 22 et entre les tubes enveloppes adjacents. Comme on le verra par la suite, chacun des logements ainsi formés présente une hauteur et une section qui lui permettent de recevoir à la fois une barre de contrôle B et quatre assemblages A de combustible nucléaire préalablement extraits d'un réacteur nucléaire à eau bouillante.

Afin que les logements qui sont définis entre les tubes enveloppes 22, à la périphérie de l'installation, soient fermés vers l'extérieur de celle-ci, une tôle de fermeture verticale 24 est fixée à la plaque inférieure 10 et aux tubes enveloppes 22, par exemple par soudage, au moins en face de chacun des logements à fermer. En variante, ces tôles de fermeture périphériques 24 peuvent être remplacées par une tôle de fermeture verticale unique encerclant l'ensemble de l'installation.

Comme on l'a indiqué plus haut, chacun des logements définis dans chacun des tubes enveloppes 22 et entre ces tubes, est prévu pour recevoir une barre de contrôle B. A cet effet, la plaque inférieure 10 de l'installation présente sur sa face supérieure et au centre de chacun des logements précités un réceptacle constitué par une virole 26 de faible hauteur et par un trou 28 qui traverse la plaque 10 selon le même axe vertical.

L'installation de stockage selon l'invention comprend de plus des ensembles unitaires amovibles prévus pour être placés dans chacun des logements définis à l'intérieur des tubes enveloppes 22 et entre ces tubes, après qu'une barre de contrôle B ait été reçue dans ce logement.

Chacun de ces ensembles unitaires amovibles, désigné de façon générale par la référence 30 sur la figure 1, comprend quatre étuis de stockage 32, une embase 34 et des cales d'espacement 36.

De façon plus précise, chacun des étuis de stockage 32 présente une section carrée et des dimensions permettant d'y loger un assemblage A de combustible nucléaire. Chaque étui 32 comporte un fond 38 percé en son centre d'un trou 40 conçu pour recevoir et supporter le pied de l'assemblage. En outre, au moins sur une partie de sa hauteur prévue pour recevoir la partie centrale de l'assemblage A contenant le combustible nucléaire, chacun des étuis 32 est équipé intérieurement d'une garniture 42 en un matériau neutrophage. Cette garniture intérieure 42 peut notamment se présenter sous la forme de plaques planes dont les bords sont imbriqués comme l'illustre la figure 1. Une forme de réalisation de ces plaques est décrite dans le document FR-A-2 709 995.

L'embase 34 se présente sous la forme d'un tube de section carrée dont les côtés ont une longueur légèrement inférieure à celles des côtés du carré formé en section par chaque tube enveloppe 22. Les quatre étuis de stockage amovibles 32 de l'ensemble unitaire amovible 30 reposent et sont fixés côte à côte, par exemple par soudage, à une extrémité de l'embase 34. Plus précisément, lorsque l'ensemble 30 est introduit dans l'un des logements définis dans et entre les tubes enveloppes 22, l'embase 34 repose sur la plaque inférieure 10 et entoure l'embout B1 de la barre de contrôle B introduite au préalable dans ce logement. Les fonds 40 des étuis de stockage 32 sont ainsi espacés de la plaque inférieure 10 de telle sorte que les étuis se trouvent situés autour de la partie active B2 de la barre de contrôle, de part et d'autre des ailettes formées par cette partie active.

Les cales d'espacement 36 sont constituées par des plaques interposées entre les étuis 32 et sur lesquelles ces étuis sont soudés. Ces cales définissent entre les étuis 32 un espacement supérieur à l'épaisseur des ailettes de la partie active B2 de la barre de contrôle B (figure 3). Les plaques formant les cales 36 se prolongent vers le haut au-delà de l'extrémité supérieure de la barre de contrôle B et elles sont liées l'une à l'autre à ce niveau, par exemple par soudage, pour former une croix en section (figures 1 et 2). En dessous de cette partie supérieure, les plaques formant les cales 36 sont évidées dans leur partie centrale afin que la partie active B2 de la barre de contrôle B puisse être logée entre les étuis 32.

Pour permettre la préhension de l'ensemble unitaire amovible 30, des fenêtres 44 sont pratiquées dans les parties hautes des parois des étuis 32.

Il est à noter qu'en variante, les étuis 32, l'embase 34 et les cales 36 peuvent constituer des éléments non reliés les uns aux autres, conçus pour être montés et démontés séparément.

Pour faciliter la circulation de l'eau à l'intérieur de l'installation, en vue d'accroître l'efficacité du refroidissement des assemblages et des barres de contrôle, des ouvertures telles que celles qui sont illustrées en 46 et 48 sur la figure 1 sont pratiquées respectivement dans la plaque inférieure 10 et dans les cloisons latérales des étuis 32, dans les parties hautes et basses de ces étuis dépourvues de garniture intérieure 42.

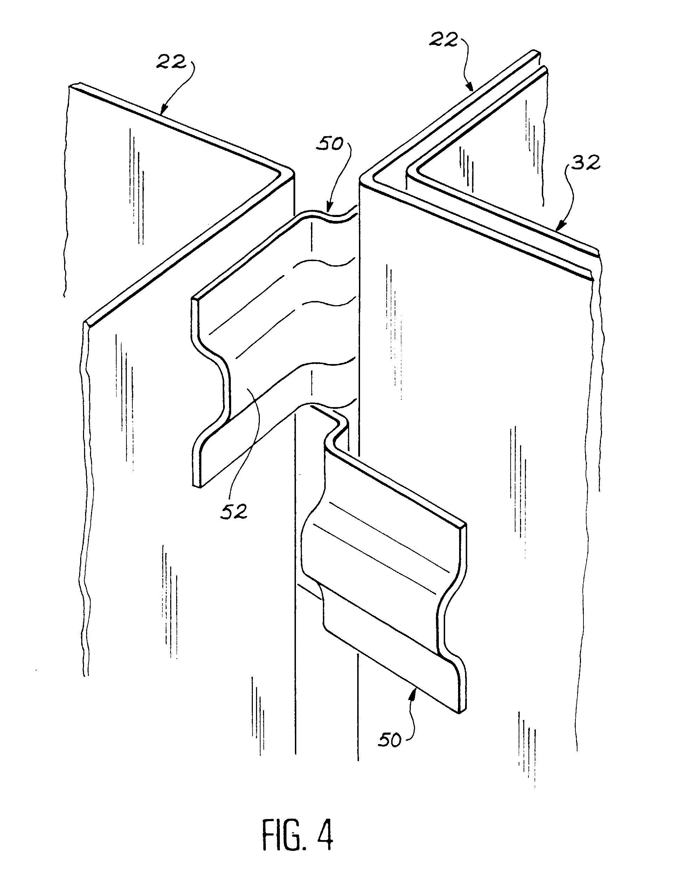

Comme l'illustre notamment la figure 4, les tubes enveloppes 22 sont reliés entre eux à différents niveaux par des pattes d'espacement 50. Plus précisément, ces pattes d'espacement 50 sont soudées sur les faces extérieures parallèles des tubes enveloppes 22, pour former approximativement des croix en vue de dessus. En outre, chacune des pattes d'espacement 50 comporte des parties en saillie 52 tournées vers les logements définis entre les tubes 22. Ces parties en saillie 52 forment des surfaces d'appui contre lesquelles viennent s'appliquer les étuis 32 reçus dans ces logements lorsque les ensembles unitaires amovibles 30 y sont reçus. De cette manière, les étuis 32 sont écartés des tubes enveloppes 22 et des lames d'eau sont formées entre ces pièces lorsque l'installation est placée dans une piscine remplie d'eau. Avec les cales 36 et les ouvertures 46 et 48 décrites précédemment, les pattes d'espacement 50 contribuent ainsi à un refroidissement efficace des assemblages et des barres de contrôle.

Lorsqu'on désire stocker des assemblages A de combustible nucléaire et des barres de contrôle B sur le site d'un réacteur nucléaire à eau bouillante, on retire un par un les ensembles unitaires amovibles 30 de leurs logements et on introduit dans ces derniers les barres de contrôle B de telle sorte que leurs embouts B1 reposent sur les embases 26. On met ensuite en place l'ensemble unitaire amovible 30 qui vient coiffer chacune des barres de contrôle B. La dernière opération consiste à introduire un assemblage A dans chacun des étuis 32 des ensembles unitaires amovibles 30. Le pied de chacun des assemblages repose alors sur le fond 38 de l'étui correspondant, l'ouverture 40 assurant son centrage.

Bien entendu, le remplissage de l'installation peut se faire de façon progressive et éventuellement incomplète. Il est aussi possible d'introduire des ensembles unitaires amovibles 30 dans les logements formés dans et entre les tubes enveloppes 22 sans avoir placé auparavant de barres de contrôle dans ces logements, lorsqu'il est nécessaire de stocker des assemblages non accompagnés de barres de contrôle. A l'inverse, l'installation selon l'invention peut servir à stocker des barres de contrôle sans qu'il soit nécessaire de stocker simultanément des assemblages. De plus, il est possible de stocker d'autres objets (tubes guides, récipients métalliques scellés, ...) dans l'installation, à la place des ensembles unitaires amovibles.

## Revendications

1. Installation de stockage conjoint d'assemblages (A) de combustible nucléaire de section carrée, et de barres de contrôle (B) comportant chacune un embout (B1) surmonté d'une partie active (B2), de section cruciforme, caractérisée par le fait qu'elle comprend :
- une plaque inférieure (10), sensiblement horizontale ;
- des tubes enveloppes (22), de section carrée, disposés en damier et fixés sensiblement verticalement sur la plaque inférieure (10) de façon à définir, dans et entre les tubes enveloppes (22), des logements aptes à recevoir chacun une barre de contrôle (B) reposant par son embout (B1) sur la plaque inférieure (10) ;
- des étuis de stockage amovibles (32), de section carrée, aptes à être montés par groupes de quatre dans chacun des logements autour de la partie active (B2) d'une barre de contrôle (B), chaque étui (32) comportant un fond (38) apte à supporter un assemblage (A) de combustible nucléaire ; et
- des embases (34) interposées entre la plaque inférieure (10) et chaque groupe de quatre étuis (32) de telle sorte que les fonds (38) de ces étuis soient espacés de la plaque inférieure (10) d'une distance sensiblement égale à la hauteur de l'embout (B1) d'une barre de contrôle (B).

2. Installation selon la revendication 1, caractérisé par le fait que la plaque inférieure (10) comporte des pieds de hauteur réglable (12) faisant saillie vers le bas.

3. Installation selon l'une quelconque des revendications 1 et 2, caractérisée par le fait qu'elle comporte de plus au moins une tôle de fermeture (24), sensiblement verticale, fermant les logements définis entre les tubes enveloppes (22).

4. Installation selon l'une quelconque des revendications 1 à 3, caractérisée par le fait que chacun des étuis de stockage (32) comporte une garniture intérieure (42) en un matériau neutrophage.

5. Installation selon l'une quelconque des revendications précédentes, caractérisée par le fait que les tubes enveloppes (22) sont reliés entre eux par des pattes d'espacement (50) qui comportent des surfaces d'appui (52) tournées vers les logements définis entre les tubes enveloppes (22), de telle sorte que les étuis (32) reçus dans ces derniers logements soient espacés des tubes enveloppes (22).

6. Installation selon l'une quelconque des revendications précédentes, caractérisée par le fait que des cales (36) sont interposées entre les quatre étuis (32) reçus dans un même logement, de telle sorte que ces étuis soient espacés les uns des autres et de la barre de contrôle (B).

7. Installation selon la revendication 6, caractérisée par le fait que chaque groupe de quatre étuis (32) fait partie d'un ensemble unitaire amovible (30) comprenant de plus l'une desdites embases (34) et lesdites cales (36).

8. Installation selon la revendication 7, caractérisée par le fait que l'embase de chaque ensemble unitaire amovible (30) est une pièce tubulaire (34) sensiblement verticale, de section carrée légèrement inférieure à celle des tubes enveloppes (22).

9. Installation selon l'une quelconque des revendications précédentes, caractérisée par le fait qu'une partie haute de chacun des étuis (32) comporte des moyens de préhension (44).

10. Installation selon l'une quelconque des revendications précédentes, caractérisée par le fait que la plaque inférieure (10) et des cloisons latérales des étuis (32) comportent des ouvertures (46, 48).

11. Procédé de stockage conjoint d'assemblages (A) de combustible nucléaire, de section carrée, et de barres de contrôle (B) comportant chacune un embout (B1) surmonté d'une partie active (B2), de section cruciforme, dans une installation de stockage présentant des logements sensiblement verticaux, de section carrée, caractérisé par le fait qu'il comprend les étapes suivantes :
- insertion d'une barre de contrôle (B) dans chacun des logements,
- mise en place d'un groupe de quatre étuis de stockage amovibles (32) dans chacun des logements, autour de la partie active (B2) de la barre de contrôle (B) ; et
- insertion d'un assemblage (A) de combustible nucléaire dans chacun des étuis (32).

12. Procédé selon la revendication 11, caractérisé par le fait que la mise en place d'un groupe de quatre étuis (32) est assurée en introduisant dans le logement un ensemble unitaire amovible (30) comprenant les quatre étuis (32), des cales d'espacement (36) interposées entre les étuis et une embase (34) disposée sous les étuis, dans le fond du logement et autour de l'embout de la barre de contrôle.

## Patentansprüche

1. Vorrichtung zum gemeinsamen Lagern von Kernbrennstabbündeln (A) mit quadratischem Querschnitt und von Steuerstäben (B), von denen jeder ein Ende (B1) aufweist, überragt von einem aktiven Teil (B2) mit kreuzförmigem Querschnitt,
**dadurch gekennzeichnet,** daß sie umfaßt:
- eine untere Platte (10), im wesentlichen horizontal;
- Hüllrohre (22) mit quadratischem Querschnitt, schachbrettartig angeordnet und im wesentlichen vertikal auf der unteren Platte (10) befestigt, so daß sie innerhalb und zwischen den Hüllrohren (22) Aufnahmen definieren, von denen jede einen Steuerstab (B) aufnehmen kann, der mit seinem Sockel (B1) auf der unteren Platte (10) ruht;
- herausnehmbare Lagerhülsen (32) mit quadratischem Querschnitt, die in Vierergruppen in jeder der Aufnahmen angebracht werden können, um den aktiven Teil (B2) eines Steuerstabs (B) herum, wobei jede Hülse (32) einen Boden (38) hat, der ein Kernbrennstabbündel (A) tragen kann; und
- Distanzrohre (34), eingefügt zwischen die untere Platte (10) und jede Vierergruppe von Hülsen (32), so daß die Böden (38) dieser Hülsen einen Abstand von der unteren Platte gleich der Höhe des Sockels (B1) eines Steuerstabs (B) haben.

2. Vorrichtung nach Anspruch 1, dadurch gekennzeichnet, daß die untere Platte (10) höhenverstellbare Füße (12) umfaßt, die nach unten vorstehen.

3. Vorrichtung nach einem der Ansprüche 1 und 2, dadurch gekennzeichnet, daß sie zudem wenigstens ein im wesentlichen vertikales Verkleidungsblech (24) umfaßt, das die Aufnahmen zwischen den Hüllrohren (22) verschließt.

4. Vorrichtung nach einem der Ansprüche 1 bis 3, dadurch gekennzeichnet, daß jede der Lagerhülsen (32) eine Innenverkleidung (42) aus einem neutrophagen Material enthält.

5. Vorrichtung nach einem der vorangehenden Ansprüche, dadurch gekennzeichnet, daß die Hüllrohre (22) durch Distanzbänder (50) miteinander verbunden sind, die Auflageflächen (52) haben, die den zwischen den Hüllrohren (22) definierten Aufnahmen zugewandt sind, so daß die Hülsen (32), die in diesen letzteren sitzen, von den Hüllrohren (22) beabstandet sind.

6. Vorrichtung nach einem der vorangehenden Ansprüche, dadurch gekennzeichnet, daß Abstandsstücke (36) zwischen die vier in derselben Aufnahme sitzenden Hülsen (32) eingefügt sind, so daß diese Hülsen voneinander und von dem Steuerstab (B) beabstandet sind.

7. Vorrichtung nach Anspruch 6, dadurch gekennzeichnet, daß jede Gruppe aus vier Hülsen (32) Teil eines herausnehmbaren einheitlichen Systems (30) ist, das zudem eines der genannten Distanzrohre (34) und die genannten Abstandsstücke (36) umfaßt.

8. Vorrichtung nach Anspruch 7, dadurch gekennzeichnet, daß das Distanzrohr jedes herausnehmbaren einheitlichen Systems (30) ein im wesentlichen vertikales Rohrstück (34) ist, dessen quadratischer Querschnitt etwas kleiner als derjenige der Hüllrohre (22) ist.

9. Vorrichtung nach einem der vorangehenden Ansprüche, dadurch gekennzeichnet, daß ein oberer Teil jeder Hülse (32) Ergreifungseinrichtungen (44) umfaßt.

10. Vorrichtung nach einem der vorangehenden Ansprüche, dadurch gekennzeichnet, daß die untere Platte (10) und Seitenwände der Hülsen (32) Öffnungen (46, 48) umfassen.

11. Verfahren zum gemeinsamen Lagern von Kernbrennstabbündeln (A) mit quadratischem Querschnitt und von Steuerstäben (B), von denen jeder ein Ende (B1) aufweist, überragt von einem aktiven Teil (B2) mit kreuzförmigem Querschnitt, in einer Lagervorrichtung mit im wesentlichen vertikalen Aufnahmen von quadratischem Querschnitt,
**dadurch gekennzeichnet,** daß es die folgenden Schritte umfaßt:
- Einführen eines Steuerstabs (B) in jede der Aufnahmen,
- Einsetzen einer Vierergruppe herausnehmbarer Lagerhülsen (32) in jede der Aufnahmen, um den aktiven Teil (B2) des Steuerstabs (B) herum; und
- Einführen eines Kernbrennstoffstabbündels (A) in jede der Hülsen (32).

12. Verfahren nach Anspruch 11, dadurch gekennzeichnet, daß das Einsetzen einer Vierergruppe Hülsen (32) erfolgt, indem man in die Aufnahme ein herausnehmbares einheitlichen System (30) einführt, das die vier Hülsen (32), Abstandsstücke (36), angeordnet zwischen den Hülsen, und ein Distanzrohr (34) umfaßt, das unter den Hülsen angebracht ist und den Steuerstab umgibt.

## Claims

1. Installation for the joint storage of nuclear fuel assemblies (A) of square form, and of control bars (B) which each comprise a tip (B1) surmounted by a cruciform active part (82) this installation comprising :
- a lower plate (10), that is substantially horizontal :
- encasing tubes (22), of square section, positioned checker fashion and fixed substantially vertically onto the lower plate (10) so as to form, in and between the encasing tubes (22), housings each able to accommodate a control bar (B) resting on its tip (B1) on the lower plate (10) :
- removable storage holders (32), of square section, able to be mounted in groups of four in each of the housings around the active part (B2) of a control bar (B), each holder (32) comprising a borrom (38) able to support a nuclear fuel assembly (A) : and
- baseplates (34) positioned in between the lower plate (10) and each group of four holders (32) in such manner that the bottoms (38) of these holders are separated from the lower plate (10) over a distance that is appreciably equivalent to the height of the tip (B1) of a control bar (B).

2. Installation according to claim 1, characterized in that the lower plate (10) comprises feet (12) of adjustable height which project downwards.

3. Installation according to claims 1 or 2, characterized in that it also comprises at least one, substantially vertical, enclosure plate (24) closing the housings formed between the encasing tubes (22).

4. Installation according to any one of the claims 1 to 3, characterized in that each of the storage holders (32) comprises an inner cladding (42) in neutrophage material.

5. Installation according to any one of the preceding claims, characterized in that the encasing tubes (22) are interconnected by spacer clamps (50) which comprise support surfaces (52) oriented towards the housings formed between the encasing tubes (22), so that the holders (32) accommodated in these latter housings are maintained distant from the encasing tubes (22).

6. Installation according to any one of the preceding claims, characterized in that wedges (36) are positioned in between the four holders (32) accommodated in the same housing, so that these holders are separated one from one another and from the control bar (B).

7. Installation according to claim 6, characterized in that each group of four holders (32) is part of a removable group (30) unit comprising in addition one of said baseplates (34) and said wedges (36).

8. Installation according to claim 7, characterized in that the baseplate of each removable unit (30) is a, substantially vertical, tubular element (34) whose square section is slightly smaller than that of the encasing tubes (22).

9. Installation according to any one of the preceding claims, characterized in that an upper part of each of the holders (32) comprises gripping means (44).

10. Installation according to any one of the preceding claims, characterized in that the lower plate (10) and the side panels of the holders (32) comprise openings (46, 48).

11. Method for the joint storage of nuclear fuel assemblies (A) of square section, and control bars (B) which each comprise a tip (81) surmounted by an active part (B2) of cruciform shape in a storage installation providing substantially vertical housings, of square section, characterized in that it comprises the following steps :
- insertion of a control bar (B) in each of the housings,
- positioning of a group of four removable storage holders (32) in each of the housings, around the active part (82) of the control bar (B) : and
- insertion of a nuclear fuel assemble (A) in each of the holders (32)

12. Method according to claim 11, characterized in that the positioning of a group of four holders (32) is made by inserting into the housing a removable unit (30) comprising the four holders (32), spacer wedges (36) positioned between the holders and a baseplate (34) placed under the holders, in the bottom of the housing and around the tip of the control bar.
